# EUROPÄISCHE PATENTSCHRIFT

(11) **EP 1 632 682 B1**
(45) Veröffentlichungstag und Bekanntmachung des Hinweises auf die Patenterteilung: **23.04.2008**
(21) Anmeldenummer: 05019083.4
(22) Anmeldetag: 02.09.2005
(51) Int. Cl.: F16B 5/12, F16B 37/06

(54) **Schweissbares Befestigungselement**
Weldable fastening element
Elément de fixation soudable

(30) Priorität: 03.09.2004 DE 102004042700
(43) Veröffentlichungstag der Anmeldung: 08.03.2006
(73) Patentinhaber: WKW Erbslöh Automotive GmbH, 42349 Wuppertal (DE)
(72) Erfinder: Warburg, Dierk, 06000 Nice (FR)
(74) Vertreter: Sparing, Rolf Klaus

(56) Entgegenhaltungen:
- FR-A- 2 518 671
- US-A1- 2004 076 465

## Beschreibung

Die Erfindung betrifft ein Befestigungselement nach dem Oberbegriff des Anspruchs 1.

Bei der Befestigung von Anbautellen an einer flächigen Struktur, wie insbesondere der Befestigung von Zierteilen oder Leisten an einer Fahrzeugkarosserie, sind, abhängig vom jeweiligen Anbauteil und der flächigen Struktur, vielfältige Befestigungsmittel und -verfahren bekannt.

Aus der Praxis ist hierzu bekannt, für eine einfache Montage von Türblenden an der Karosserie eines Fahrzeugs selbstschneidende Gewindeschrauben einzusetzen. Alternativ hierzu ist aus der Praxis bekannt, Löcher in die Karosserie, häufig im Bereich der A-Säule von Kraftfahrzeugen, zu bohren, wobei in die Löcher zur Befestigung des Anbauteils beispielsweise Nieten oder Schrauben eingebracht werden. Nachteilig bei solchen bekannten Befestigungen ist vor allem deren eingeschränkte Dichtigkeit gegenüber Wasser, was in der Folge zu Korrosionsproblemen führen kann. Weiterhin sind bei derartigen Befestigungssystemen Reparaturen nur aufwendig und unter Gefährdung des Korrosionsschutzes machbar.

Um eine Durchbrechung der Karosserie bei der Montage des Anbauteils zu vermeiden, ist es in der Praxis auch bekannt, Befestigungselemente auf die Karosserie zu kleben, was jedoch oftmals nicht den gewünschten Halt der Verbindung gewährleistet. Besseren Halt bieten T-Bolzen, welche auf die Karosserie geschweißt werden. Auf solche aufgeschweißten T-Bolzen wird dann ein Federelement zur Befestigung des Anbauteils mit einer Durchbrechung etwa in Form eines Schlüssellochs aufgesteckt und fixiert. Nachteilig hierbei ist vor allem, dass die T-Bolzen vor dem Lackieren der Karosserie aufgeschweißt werden und das Federelement erst nach dem Lackieren aufgesteckt wird, so dass grundsätzlich zwei Arbeitsgänge notwendig sind. Würde das Federelement bereits vor dem Lackieren der Karosserie auf den T-Bolzen aufgesteckt, so bilden sich zwischen dem Befestigungselement und der Karosserie beim Lackieren "Lackbrücken", welche bei einer Belastung des Befestigungselements meist abplatzen, da das Federelement nicht verdrehsicher auf dem T-Bolzen angebracht ist. Zudem ist ein auf das Federelement aufgebrachter Lack im allgemeinen den mit einer Belastung des Federelements verbundenen Dehnungen und Schrumpfungen nicht gewachsen und reißt ein. Werden mit dem Ziel eines einzelnen Arbeitsgangs zur Montage des Befestigungselements federnde Laschen aus Karosseriestahl auf die Karosserie geschweißt, wie ebenfalls aus der Praxis bekannt ist, so hat sich gezeigt, dass ein ausreichender Halt durch die federnde Lasche im allgemeinen nicht erreicht werden kann, da Karosseriestahl als Federelement aufgrund seiner Weichheit ungeeignet ist.

DE 1 807 110 A1 beschreibt eine Befestigung für eine Zierleiste mittels eines schweißbaren Befestigungselementes, das einen an die Karosserie angeschweißten, in einer Vertiefung versenkt angeordneten Bolzen umfaßt, der einen verbreiterten Kopf aufweist und als Schweißelement vorgesehen ist. An den Bolzen ist ein zweiteiliges Zwischenelement angebracht, wobei ein erster Teil als nicht-metallischer Haltekörper und ein zweiter Teil als flexibles Federteil ausgebildet ist, das als Blecheinsatz in eine Längsausnehmung des Haltekörpers einlegbar ist. Der Blecheinsatz übergreift mit beiden Enden Randwülste des Haltekörpers und nimmt in einem Schlitz den Kopf des Bolzens derart auf, daß der als Federteil ausgebildete Blecheinsatz gespannt wird und den Haltekörper gegen die Karosserie festdrückt. Die Zierleiste wird an den Haltekörper gedrückt und in Hinterschneidungen aufgenommen. Der als Federteil ausgebildete Blecheinsatz kommt mit der Zierleiste nicht in Kontakt und stellt nur eine Verbindung zwischen dem als Bolzen ausgebildeten Schweißelement und dem die Zierleiste aufnehmenden Haltekörper dar. Nachteilig ist, daß das Befestigungsmittel aufwendig aufgebaut ist, wobei insbesondere der Verbund aus dem Haltekörper und dem Blecheinsatz, der ein zweiteiliges Federelement bildete bei der Montage zeitaufwendig herzustellen ist und jeweils aufeinander abgestimmt ausgebildete Komponenten erfordert. Ungünstig ist weiter, daß das Befestigungsmittel nur über eine vergleichsweise kleine Fläche, nämlich der Unterseite des Bolzens, an der Karosserie befestigt ist, so daß das Befestigungsmittel nur geringe Kräfte aufnehmen kann. Der Bolzen steht dabei über der Oberfläche der Karosserie deutlich über, um das Federelement aufnehmen zu können, so daß eine derartige Anordnung optisch ungünstig ausgebildet ist und im wesentlichen nur dann anwendbar ist, wenn der Bolzen seinerseits in einer Vertiefung angeordnet und dabei etwas optisch kaschiert ist. Nachteilig ist ferner, daß der Bolzen angebracht sein muß, bevor das Federelement eingespannt wird, da der Bolzen von dem zweiteiligen Federelement weitgehend vollständig abgedeckt wird.

Ein weiteres bekanntes Verfahren ist die Befestigung von Befestigungselementen mittels Durchsatzfügens. Dies kann vor dem Lackieren stattfinden, jedoch wird hierzu ein von beiden Seiten zugängiges Karosserieelement benötigt, vor allem, da die Fügekräfte sehr hoch sind. Folglich überlagern sich der Positionstoleranz die Füge- und Schweißtoleranzen der Karosserieelemente.

US 2004/0076465 A1 beschreibt ein Befestigungselement sowie ein Verfahren zum Befestigen eines gestreckten Stücks an eine metallische Fläche, speziell das Befestigen von Kabeln über eine Kabelbinderschlaufe an der Karosserie eines Kraftfahrzeugs. Das Befestigungselement enthält ein als Schweißbolzen ausgebildetes Schweißelement sowie ein Montageteil, das das zu montierende Stück, speziell also die Kabel in der Kabelbinderschlaufe, aufnimmt. Das Verfahren sieht vor, erst das Befestigungselement durch Verbinden des Montageteils mit dem Schweißbolzen zu einer Einheit vorzunehmen und dann die Einheit an der Karosserie durch Bogenschweißen festzulegen. In einem Ausführungsbeispiel umfaßt das Montageteil eine elastisch verformbare Lasche, die die Kabel federnd aufnimmt. In diesem Ausführungsbeispiel ist also das Montageteil als Federelement ausgebildet.

FR 251 8671 A beschreibt ein Befestigungselement, das zwei an der Oberfläche einer Karosserie angeschweißte Bolzen umfaßt. Nach der Befestigung der Bolzen wird ein spangenartiges, gespanntes Element angebracht, wobei das Element Ausbuchtungen aufweist, die an den Bolzen anliegen.

Es ist die Aufgabe der Erfindung, ein Befestigungselement anzugeben, das insbesondere bereits vor dem Lackieren einfach und flexibel anzubringen ist und eine hohe Korrosionsbeständigkeit aufweist.

Diese Aufgabe wird erfindungsgemäß durch ein Befestigungselement mit den Merkmalen des Anspruchs 1 gelöst.

Das vorgeschlagene Befestigungselement zur Montage eines Anbauteils an einer flächigen Struktur, insbesondere an einer Fahrzeugkarosserie, umfaßt ein einteiliges Federelement aus einem elastisch verformbaren Material zur Befestigung des Anbauteils an dem Befestigungselement und ein Schweißelement aus einem schweißbaren Material zur Befestigung des Befestigungselements an der flächigen Struktur durch Verschweißen.

In vorteilhafter Weise wird durch das Befestigungselement eine Durchbrechung der flächigen Struktur, insbesondere der Karosserie, mit den damit einher gehenden Dichtigkeitsproblemen gegenüber Wasser und Stabilitätsproblemen vermieden. Da das Befestigungselement als Einheit auf die flächige Struktur geschweißt wird, ist nur ein Arbeitsgang zur Montage des Befestigungselements an der flächigen Struktur notwendig. Da nur eine kleine Schweißstelle an der flächigen Struktur benötigt wird, ist eine große Flexibilität in Bezug auf die Montagestelle des Befestigungselementes, insbesondere in Hinblick auf eine Mehrfachmontage bzw. eine Reparaturfähigkeit, gegeben. Vorteilhaft ist auch, daß das Befestigungselement vor dem Lackieren auf die flächige Struktur angebracht werden und anschließend mitlackiert werden kann, wobei das Schweißelement oder bei bereits korrosionsbeständigem Schweißelement die Schweißpunkte am Schweißelement durch die Lackbeschichtung korrosionsbeständig werden.

Da das Befestigungselement auf den fertigen Karosserierohbau geschweißt wird, ist es relativ zu beliebigen Karosseriekanten ausricht- und referenzierbar. Die Reparaturfähigkeit der Befestigungseinheit ist im Fall einer zweiteiligen Ausführung des Befestigungselements dadurch gegeben, dass im Reparaturfall das Schweißelement an dem Fahrzeug verbleibt und der Befestigung eines Reparaturelements dient. Dieses Reparaturelement kann dem Serien-Federelement entsprechen, oder aber auch speziell zur Reparatur gestaltet sein.

Bei dem Befestigungselement besteht das Federelement vorzugsweise aus Federstahl oder einem Thermoplasten, um eine ausreichende Federkraft und Elastizität sicherzustellen. Um eine Korrosionsbeständigkeit des Federelements zu gewährleisten, ist es besonders vorteilhaft, wenn das Material des Federelements mit einem Korrosionshemmstoff beschichtet ist. Hierzu kann beispielsweise eine Zink/Nickel-haltige Beschichtung vorgesehen sein. Ein Reißen des bei dem Lackieren auf das Federelement aufgebrachten Lacks bei einer Beanspruchung des Federelements ist somit ohne Belang, da eine Korrosionsbeständigkeit bereits durch den Korrosionshemmstoff sichergestellt ist.

Es ist günstig, wenn das Schweißelement aus dem gleichen Material besteht wie die flächige Struktur, auf die das Schweißelement aufgeschweißt wird, und damit beispielsweise aus Karosseriestahl, Aluminium oder einem Thermoplasten ausgebildet ist. Die Wahl eines geeigneten Materials für das Schweißelement hängt hierbei wesentlich von dem Material der flächigen Struktur ab, auf welches das Schweißelement aufgebracht wird. Handelt es sich bei der flächigen Struktur um eine Fahrzeugkarosserie aus Karosseriestahl, so ist es günstig, wenn auch das Schweißelement aus Karosseriestahl besteht. Handelt es sich bei der flächigen Struktur um einen Aluminiumgegenstand bzw. Aluminiumkarosserie, so ist es von Vorteil, wenn auch das Schweißelement aus Aluminium besteht. Bei einer flächigen Struktur aus Kunststoff ist es günstig, wenn das Schweißelement aus einem Thermoplasten besteht, welcher mit dem Kunststoff der flächigen Struktur verschweißt werden kann.

Bei einer vorteilhaften Ausführungsform des Befestigungselements sind das Federelement und das Schweißelement jeweils einteilig ausgebildet, wobei das Federelement aus einem Thermoplasten ausgebildet ist und das Schweißelement von dem Federelement wenigstens teilweise umschlossen oder umgossen ist. Auf diese Weise ist in besonders einfacher Weise eine Montage des Befestigungselements an die flächige Struktur ermöglicht. Federelement und Schweißelement sind zudem verdrehsicher miteinander verbunden, so dass bei einem etwaigen anschließenden Lackieren des Befestigungselements ein Abplatzen von Lackbrücken bei Belastung des Befestigungselements zu vermeiden ist. Zudem ist das Schweißelement an seinen von dem Thermoplasten umgebenen Oberflächen bereits durch den Thermoplasten korrosionsgeschützt.

Bei einer weiteren vorteilhaften Ausführungsform des Befestigungselements sind das Federelement und das Schweißelement in zweiteiliger Form ausgebildet, wobei das Schweißelement plattenförmig ist und an seinen Längsrändern jeweils eine Nut zur Aufnahme des Federelements aufweist. Durch die Nuten wird das Federelement in den zur Nutrichtung senkrechten Richtungen gefangen. Zudem weist das Federelement einen Sitz in Nutrichtung für das Schweißelement auf, durch welchen Sitz das Federelement in Nutrichtung gefangen ist.

Bei einer alternativen Ausgestaltung dieser zweiteiligen Ausführungsform ist anstelle der an den Längsrändern des plattenförmigen Schweißelements angeordneten Nuten jeweils eine Hinterschneidung vorgesehen. Durch die Hinterschneidungen wird das Federelement in dem montierten Befestigungselement in den zur Hinterschneidungsrichtung senkrechten Richtungen gefangen, so daß das Federelement und das Schweißelement vor der Montage des Befestigungselements an der flächigen Struktur in Montagerichtung des Befestigungselements gefügt werden können. Nach erfolgter Befestigung des Befestigungselements an der flächigen Struktur wird das Federelement vorteilhaft zwischen den Hinterschneidungen des Schweißelements und der flächigen Struktur verklemmt.

Es ist weiter günstig, wenn das Federelement wenigstens ein durch einen Bügel verbundenes Paar gegenüberliegender Federarme aufweist. Beispielsweise kann das Federelement zwei Federarmpaare aufweisen. Um ein Verklemmen des Anbauteils in dem Federelement zu erleichtern, können die Federarme zusätzlich mit Kümpeln versehen sein, die als Rastelemente zu einem Einrasten des Anbauteils dienen.

Vorzugsweise wird zur Befestigung des Befestigungselements wird dessen Positionierung durch eine am Karosserieblech angeformte Sicke erleichtert. Dabei handelt sich günstigerweise, insbesondere bei einteiligen Karosserieblechen wie beispielsweise dem Seitenwandrahmen, um eine oder mehrere runde oder mehreckige Verprägungen bzw. Einprägungen, die der Grundform des Befestigungselementes angepaßt sind und in die das Befestungselement nach dem Schloß/Schlüssel-Prinzip positioniert und dann verschweißt wird.

Weitere Vorteile und Merkmale der Erfindung ergeben sich aus den abhängigen Ansprüchen sowie aus der nachfolgenden Beschreibung eines bevorzugten Ausführungsbeispiels der Erfindung.

Die Erfindung wird nachfolgend anhand eines bevorzugten Ausführungsbeispiels unter Bezugnahme auf die anliegenden Zeichnungen näher erläutert und beschrieben.
- Fig. 1: zeigt einen Längsschnitt durch ein bevorzugtes Ausführungsbeispiel eines erfindungsgemäßen Befestigungselementes, das an eine Oberfläche einer Karosserie eines Fahrzeugs befestigt ist.
- Fig. 2: zeigt einen Querschnitt durch das Befestigungselement aus Fig. 1 entlang der Schnittlinie B - B in Fig. 1.
- Fig.3: zeigt einen Querschnitt durch das Befestigungselement aus Fig. 1 und 2 entlang der Schnittlinie C - C in Fig. 1.

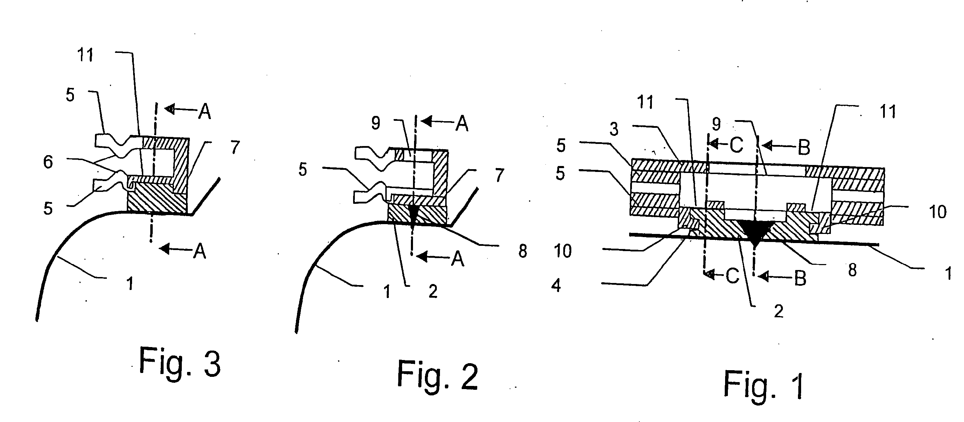

Das in Fig. 1 bis Fig. 3 dargestellte Befestigungselement umfasst ein Schweißelement 2 aus einem schweißbaren Material zur Befestigung des Befestigungselements durch Verschweißen an einer flächigen Struktur 1 einer nicht weiter dargestellten Fahrzeugkarosserie, sowie ein Federelement 3 aus einem elastisch verformbaren Material zur Befestigung eines nicht dargestellten Anbauteils an dem Befestigungselement. Das Schweißelement 2 besteht aus schweißfähigem, korrosionsgeschützten Karosseriestahl und das Federelement 3 aus Federstahl, der mit einem Korrosionshemmstoff beschichtet ist.

Bei dem dargestellten Befestigungselement sind das Federelement 3 und das Schweißelement 2 zweiteilig ausgebildet. Das Schweißelement 2 ist von im wesentlichen plattenförmiger Gestalt und weist an seinen Längsrändern jeweils eine Nut 4 zur Aufnahme des Federelements 3 auf. Das Federelement 3 ist zu diesem Zweck mit Vorsprüngen 10 zur Aufnahme in die Nuten 4 des Schweißelements 2 versehen. Durch die Nuten 4 des Schweißelements 2 wird das Federelement 3 in den zur Nutrichtung senkrechten Richtungen gefangen. Das Federelement 3 weist zwei Paare von gegenüberliegenden Federarmen 5 auf, die zur Befestigung des nicht dargestellten Anbauteils dienen. Jeder Federarm 5 ist mit einem Kümpel 6 versehen, der zu einer Verrastung des Anbauteils vorgesehen ist. Das Federelement 3 bildet mit einem Rastelement 11 einen Sitz 7 für das Schweißelement 2, durch welchen Sitz 7 das Federelement 3 in Nutrichtung gefangen ist. Das Befestigungselement ist an einer Schweißstelle 8 an der Fahrzeugkarosserie 1 befestigt. Um die Verschweißung vornehmen zu können, ist das Federelement 3 mit einer Durchbrechung 9 zum Durchführen der Schweißelektrode versehen.

### Die Erfindung funktioniert wie folgt:

Zu der Montage des Befestigungselements wird das Federelement 3 mit seinen Vorsprüngen 10 in die Nuten 4 des Schweißelements 2 eingefügt, bis das Schweißelement 2 in dem Sitz 7 des Federelements 3 sitzt. Die Befestigung längs zu den Nuten 4 erfolgt über die Rastelemente 11. Im Reparaturfall werden diese Rastelemente 11 zur Entfernung des Federelements 3 elastisch oder plastisch verformt und dieses, falls nötig, ersetzt. Im zusammengebauten Zustand sind die Rastelemente 11 durch das Anbauteil blockiert, ein versehentliches Lösen ist somit ausgeschlossen. Nach Fügen des Federelements 3 mit dem Schweißelement 2 wird das Befestigungselement mittels des Schweißelements 2 an der Schweißstelle 8 auf die Karosserie 1 geschweißt, hierzu wird die Schweißelektrode durch die Durchbrechung 9 hindurch angebracht. Anschließend wird die Karosserie gegebenenfalls noch lackiert, d. h. das Befestigungselement wird mitlackiert. Durch eine solche Lackierung werden das Schweißelement 2 insgesamt oder - bei bereits korrosionsbeständigem Schweißelement 2 - zumindest die Schweißpunkte an dem Schweißelement 2 des Befestigungselements korrosionsbeständig. Das Federelement 3 wird zwar auch mitlackiert, jedoch ist das Federelement 3 durch den aufgebrachten Korrosionshemmstoff bereits korrosionsbeständig, so dass die Lackierung in dieser Hinsicht keinen weiteren wesentlichen Vorteil mehr bringt. Da bei dem Federelement 3 durch die bei Belastung auftretenden Bewegungen der Federarme 5 ein Reißen des darauf aufgebrachten Lacks zu befürchten ist, wird die korrosionshemmende Eigenschaft wesentlich durch den auf das Federelement 3 aufgebrachten Korrosionshemmstoff bestimmt. Da das Schweißelement 2 mit der flächigen Struktur 1 und das Federelement 3 unbeweglich mit dem Schweißelement 2 verbunden sind, ist ein Abplatzen von Lack bei Belastung des Federelements nicht zu befürchten.

## Patentansprüche

1. Befestigungselement zur Montage eines Anbauteils an einer flächigen Struktur (1), insbesondere an einer Fahrzeugkarosserie, wobei das Befestigungselement umfaßt:
ein Federelement (3) aus einem elastisch verformbaren Material zur unmittelbaren Befestigung des Anbauteils, und
ein Schweißelement (2) aus einem schweißbaren Material zur Befestigung an der flächigen Struktur (1) durch Verschweißen,
wobei das Federelement (3) und das Schweißelement (2) zu einer Einhelt gefügt sind,
wobei das Befestigungselement durch das Federelement (3) und das Schweißelement (2) zweiteilig ausgebildet ist,
**dadurch gekennzeichnet,**
**dass** das Schweißelement (2) plattenförmig ist und an seinen Längsrändern jeweils eine Nut (4) bzw. Hinterschneidung zur Aufnahme des Federelements (3) aufweist, durch welche Nut (4) bzw. Hinterschneidung das Federelement (3) bei montiertem Befestigungselement in den zur Nut- bzw. Hinterschneidungsrichtung senkrechten Richtungen gefangen ist, und
**dass** das Federelement (3) einen Sitz In Nut- bzw. Hinterschneldungsrichtung für das Schweißelement (2) aufweist, durch welchen Sitz das Federelement (3) in Nut- bzw. Hinterschneidungsrichtung gefangen ist.

2. Befestigungselement nach Anspruch 1, **dadurch gekennzeichnet, dass** das Federelement (3) aus einem Material besteht, welches aus der Gruppe gewählt ist, welche aus Federstahl und einem Thermoplasten besteht.

3. Befestigungselement nach Anspruch 2, **dadurch gekennzeichnet, dass** das Federelement (3) aus Federstahl besteht, wobei auf der Oberfläche des Federstahls ein Korrosionshemmstoff aufgebracht ist.

4. Befestigungselement nach einem der Ansprüche 1 bis 3, **dadurch gekennzeichnet, dass** das Schweißelement (2) aus einem Material besteht welches aus der Gruppe gewählt ist, welche aus Karosseriestahl, Aluminium und einem Thermoplasten besteht.

5. Befestigungselement nach Anspruch 4, **dadurch gekennzeichnet, dass** das Schweißelement (2) aus einem Material besteht, welches ganz oder tellwelse korroslonsgeschützt oder schweißfähig korrosionsgeschützt ist.

6. Befestigungselement nach einem der Ansprüche 1 bis 5, **dadurch gekennzeichnet, dass** das Federelement (3) wenigstens ein durch einen Bügel verbundenes Paar gegenüberliegender Federarme (5) aufweist.

7. Befestigungselement nach Anspruch 6. **dadurch gekennzeichnet, dass** die Federarme (5) eines Paars von Federarmen (5) jeweils mit einem Kümpel (6) versehen sind.

8. Befestigungselement nach einem der Ansprüche 1 bis 7, **dadurch gekennzeichnet, dass** eine Durchbrechung (9) an dem Federelement (3) zur Durchführung einer Schweißelektrode für das Verschweißen vorgesehen ist.

## Claims

1. Fastening element for fitting an add-on part to a sheet-like structure (1), in particular to a vehicle body, wherein the fastening element comprises: a spring element (3) of an elastically deformable material for the direct fastening of the add-on part, and
a welding element (2) of weldable material for fastening to the sheet-like structure (1) by welding,
wherein the spring element (3) and the welding element (2) are joined to form a unit, and
wherein the fastening element is formed in two parts by means of the spring element (3) and the welding element (2),
**characterized in**
**that** the welding element (2) is of plate-like design and, on its longitudinal edges, has a respective groove (4) or undercut for receiving the spring element (3), by means of which groove (4) or undercut, the spring element (3) is trapped in the directions perpendicular to the groove or undercut direction when the fastening element is fitted, and
**that** the spring element (3) has a seat in the groove or undercut direction for the welding element (2), by means of which seat the spring element (3) is trapped in the groove or undercut direction.

2. Fastening element according to Claim 1, **characterized in that** the spring element (3) is composed of a material which is selected from the group comprising spring steel and a thermoplastic.

3. Fastening element according to Claim 2, **characterized in that** the spring element (3) is composed of spring steel, with a corrosion inhibitor being applied to the surface of the spring steel.

4. Fastening element according to one of Claims 1 to 3, **characterized in that** the welding element (2) is composed of a material which is selected from the group comprising bodywork steel, aluminium and a thermoplastic.

5. Fastening element according to Claim 4, **characterized in that** the welding element (2) is composed of a material which is entirely or partially corrosion-protected or is weldably corrosion-protected.

6. Fastening element according to one of Claims 1 to 5, **characterized in that** the spring element (3) has at least one pair of opposite spring arms (5) connected by a clip.

7. Fastening element according to Claim 6, **characterized in that** the spring arms (5) of a pair of spring arms (5) are each provided with a flange (6).

8. Fastening element according to one of Claims 1 to 7, **characterized in that** an aperture (9) is provided on the spring element (3) for the passage of a welding electrode for the welding.

## Revendications

1. Elément de fixation pour le montage d'une pièce rapportée sur une structure plane (1), notamment sur une carrosserie de véhicule, l'élément de fixation comprenant :
un élément de ressort (3) constitué d'un matériau élastiquement déformable pour la fixation directe de la pièce rapportée, et
un élément soudable (2) constitué d'un matériau soudable destiné à être fixé à la structure plane (1) par soudage,
l'élément de ressort (3) et l'élément soudable (2) étant assemblés pour former une unité,
l'élément de fixation étant réalisé en deux parties par l'élément de ressort (3) et l'élément soudable (2),
**caractérisé en ce que**
l'élément soudable (2) est en forme de plaque et présente sur ses bords longitudinaux à chaque fois une rainure (4) ou une contre-dépouille pour recevoir l'élément de ressort (3), l'élément de ressort (3) étant reçu, dans les directions perpendiculaires à la direction de la rainure ou de la contre-dépouille, à travers ladite rainure (4) ou contre-dépouille, lorsque l'élément de fixation est monté, et
**en ce que** l'élément de ressort (3) présente un siège dans la direction de la rainure ou de la contre-dépouille pour l'élément soudable (2), par lequel siège l'élément de ressort (3) est reçu dans la direction de la rainure ou de la contre-dépouille.

2. Elément de fixation selon la revendication 1, **caractérisé en ce que** l'élément de ressort (3) se compose d'un matériau qui est choisi parmi le groupe qui se compose d'acier à ressort et d'un thermoplastique.

3. Elément de fixation selon la revendication 2, **caractérisé en ce que** l'élément de ressort (3) se compose d'un acier à ressort, une substance inhibant la corrosion étant appliquée sur la surface de l'acier à ressort.

4. Elément de fixation selon l'une quelconque des revendications 1 à 3, **caractérisé en ce que** l'élément soudable (2) se compose d'un matériau choisi parmi le groupe constitué d'acier de carrosserie, d'aluminium et d'un thermoplastique.

5. Elément de fixation selon la revendication 4, **caractérisé en ce que** l'élément soudable (2) se compose d'un matériau qui est entièrement ou partiellement protégé contre la corrosion, ou qui est protégé contre la corrosion de manière soudable.

6. Elément de fixation selon l'une quelconque des revendications 1 à 5, **caractérisé en ce que** l'élément de ressort (3) présente au moins une paire de bras de ressort (5) opposés connectée par un étrier.

7. Elément de fixation selon la revendication 6, **caractérisé en ce que** les bras de ressort (5) d'une paire de bras de ressort (5) sont à chaque fois pourvus d'un emboutissage (6).

8. Elément de fixation selon l'une quelconque des revendications 1 à 7, **caractérisé en ce qu'**il est prévu un orifice (9) au niveau de l'élément de ressort (3), pour le passage d'une électrode de soudage pour le soudage.
